**Europäisches Patentamt**

(19) **European Patent Office**

**Office européen des brevets**

(11) Veröffentlichungsnummer: **0 015 549**
**B1**

(12) # EUROPÄISCHE PATENTSCHRIFT

(45) Veröffentlichungstag der Patentschrift:
**27.07.83**

(51) Int. Cl.³: **A 01 F 29/20,** B 27 B 5/32,
B 26 D 1/29

(21) Anmeldenummer: **80101120.6**

(22) Anmeldetag: **05.03.80**

(54) **Scheibenradhäcksler.**

(30) Priorität: **08.03.79 DE 2909000**

(43) Veröffentlichungstag der Anmeldung:
**17.09.80 Patentblatt 80/19**

(45) Bekanntmachung des Hinweises auf die Patenterteilung:
**27.07.83 Patentblatt 83/30**

(84) Benannte Vertragsstaaten:
**CH FR GB IT NL**

(56) Entgegenhaltungen:
**AT-B-328 776**
**DE-A-1 627 220**
**DE-B-1 216 000**
**DE-C-879 294**
**US-A-2 017 580**
**US-A-2 235 919**
**US-A-2 938 557**

(73) Patentinhaber: **Alois Pöttinger OHG,**
**A-4710 Grieskirchen (AT)**

(72) Erfinder: **Leposa, Wolfgang, Sonnfeldsiedlung 30,**
**A-4710 Grieskirchen (AT)**
Erfinder: **Schremmer, Wolfgang, A-4062 Thening 50 (AT)**
Erfinder: **Voraberger, Ulrich, Beethovenstrasse 4,**
**A-4701 Bad Schallerbach (AT)**

(74) Vertreter: **Patentanwälte Dipl.-Ing. A. Grünecker,**
**Dr.-Ing. H. Kinkeldey, Dr.-Ing. W. Stockmair,, Dr. rer. nat.**
**K. Schumann, Dipl.-Ing. P.H. Jakob, Dr. rer. nat. G.**
**Bezold Maximilianstrasse 58, D-8000 München 22 (DE)**

Scheibenradhäcksler

Die Erfindung betrifft einen Scheibenradhäcksler mit einem auf einer Messerradwelle angebrachten Messerrad, das eine als Träger der Messer dienende Scheibe aufweist, wobei als Messerbefestigung eine durch eine Bohrung der Messerradscheibe zu beiden Seiten rechtwinklig zur Ebene der Messerradscheibe herausragende Gewindehülse dient, an welcher das Messer mittels einer durch diese gesteckten Gewindeschraube mit Muttern befestigt ist, und auf welcher zwei die Messerradscheibe zwischen sich festklemmende Gegenmuttern gegeneinander verspannbar aufgeschraubt sind.

Bei einem bekannten Scheibenradhäcksler dieser Art (DE-B-1 216 000) weist die auf der Messerseite befindliche Gegenmutter einen als Klauenkupplung ausgebildeten Fortsatz auf, der in die Bohrung der Messerscheibe ragt und mit einem Klauenkupplungsfortsatz eines Zwischenringes eingreift, der zwischen der Messerradscheibe und der anderen Gegenmutter angeordnet ist. Der Zwischenring weist kein Gewinde auf, er ist aber genauso mit einem Sechskant versehen wie die anliegende Gegenmutter, so daß nach dem Lösen dieser Gegenmutter dieselbe zusammen mit dem Zwischenring mittels eines Schraubenschlüssels gedreht werden kann, wobei die Drehbewegung des Zwischenringes über die Klauenkupplungen auf die gegenüberliegende Gegenmutter übertragen wird, so daß das axiale Verstellen der Gewindehülse und des daran befestigten Messers von der einen Seite her erfolgen kann. Die Klauenkupplungsfortsetzung der einen Gegenmutter und des Zwischenringes weisen einen wesentlich geringeren Außendurchmesser auf als die Bohrung in der Messerradscheibe bezüglich ihres Innendurchmessers. Wenn zwischen der Klemmseite des Zwischenringes bzw. der mit der Messerradscheibe zusammenwirkenden Gegenmutter und den Stirnseiten der Messerradscheibe Schmutz oder ein anderer fester Körper gelangt, nimmt die Gewindehülse beim Verspannen der Gegenmuttern nicht eine genau rechtwinkelige Lage zur Ebene der Messerradscheibe ein, sondern wird etwas verkantet. Somit nimmt auch die Schneidkante des Häckselmessers nicht die richtige Lage zur Gegenschneide ein. Außerdem besteht dabei die große Gefahr, daß sich die Mutterbefestigung allmählich lockert und sich dabei unkontrollierbar zusammen mit dem Häckselmesser schräg stellt, so daß die Schneidkante des Häckselmessers an der Gegenschneide anhaken kann, was zumindest zur Zerstörung des Häckselmessers führen kann. Dabei ist zu bedenken, daß der Abstand des Häckselmessers zur Messerradscheibe verhältnismäßig groß ist, weil ein weitgehend freier Zwischenraum zwischen den Messern und der Messerradscheibe geschaffen werden muß, um den Abfluß des zerkleinerten Erntegutes bei geringem Rei

bungswiderstand zu gewährleisten. Es treten an sich schon außerordentlich große Kräfte beim Häckseln des Erntegutes wie z. B. Maisstengel auf. Infolge des verhältnismäßig großen Abstandes der Messer zur Meserradscheibe ergibt sich darüber hinaus ein beträchtlicher Hebelarm, so daß die Gefahr des Lockerns der Messerbefestigung und der sich danach unweigerlich einstellenden Schräglage der Messerbefestigung erheblich ist. Auch nur ein einziger solcher Vorfall kann zum Zerstören des Scheibenradhäckslers führen.

Diese Gefahr ist auch gegeben, wenn bei der Messerbefestigung kein Zwischenring benützt wird, sondern nur zwei die Messerradscheibe zwischen sich festklemmende Gegenmuttern (US-A-2 938 557).

Der Erfindung liegt die Aufgabe zugrunde, einen Scheibenradhäcksler der eingangs geschilderten Art so auszubilden, daß eine Gefahr des Kippens der Messer und des Aufschlagens ihrer Schneidkanten auf den Gegenschneiden auch bei einer Lockerung der Verschraubung der Messerradbefestigung mit Sicherheit ausgeschlossen ist. Zur Lösung dieser Aufgabe sieht die Erfindung bei einem Scheibenradhäcksler der eingangs geschilderten Art vor, daß mindestens eine der Gegenmuttern auf ihrer der Messerradscheibe zugewandten Seite mit einem zylindrischen Absatz versehen ist, dessen Außendurchmesser sich mit Schiebesitz am Innendurchmesser der zugeordneten Bohrung in der Messerradscheibe abstützt.

Durch diese Maßnahme wird gewährleistet, daß infolge des Formschlusses zwischen dem zylindrischen Absatz der Gegenmutter und der zugeordneten Bohrung in der Messerradscheibe ein Schrägstellen der Gewindehülse auch dann ausgeschlossen ist, wenn sich die Klemmwirkung der Gegenmuttern lockert, beispielsweise wenn sich beim Verspannen derselbe Schmutz zwischen die Klemmflächen eingelagert hat.

Das sichere Halten der Messer selbst bei etwas gelockerten Gegenmuttern wird noch begünstigt, wenn in an sich bekannter Weise für jedes Häckselmesser zwei Messerbefestigungen vorgesehen sind.

In der Zeichnung ist ein Ausführungsbeispiel der Erfindung dargestellt. Dabei zeigt

Fig. 1 den Scheibenradhäcksler in Seitenansicht in schematischer Darstellung,

Fig. 2 eine Vorderansicht des Messerrades,

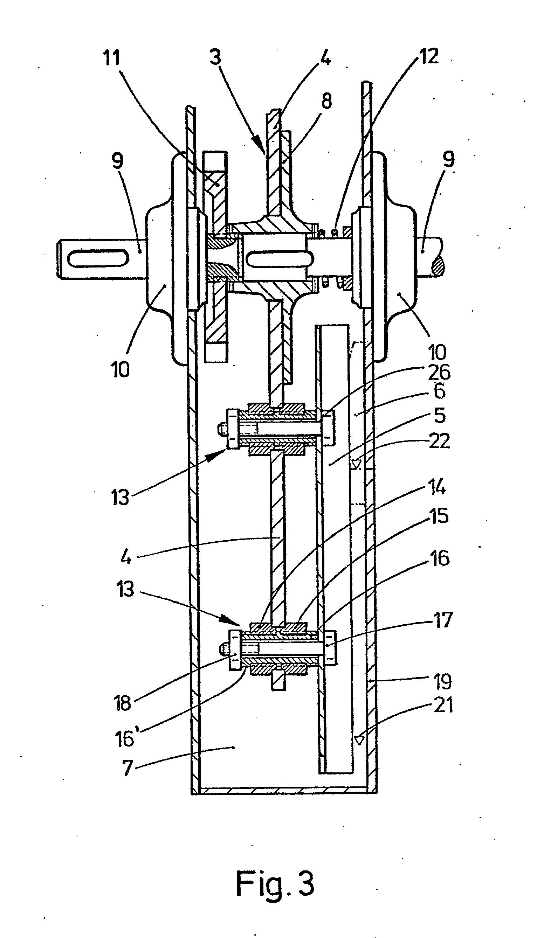

Fig. 3 einen Schnitt durch das Messerrad gemäß der Linie III-III in Fig. 2 und

Fig. 4 die Messerbefestigung im Schnitt im größeren Maßstab.

Der Scheibenradhäcksler weist eine das Erntegut, beispielsweise Mais, erfassende und abtrennende Reiheneinzugsvorrichtung 2 auf, welche das abgeschnittene Erntegut einer Preßvorrichtung 1 zuführt, die das zu einem Paket zusammengepreßte Erntegut einer Häck

selvorrichtung 23 zuführt.

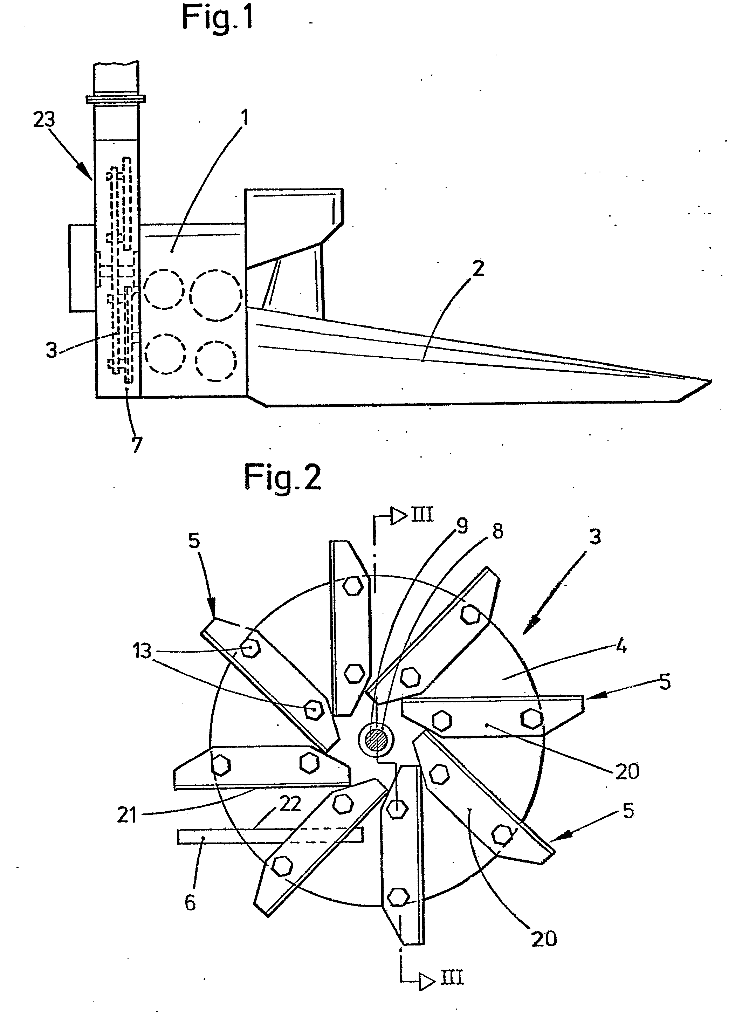

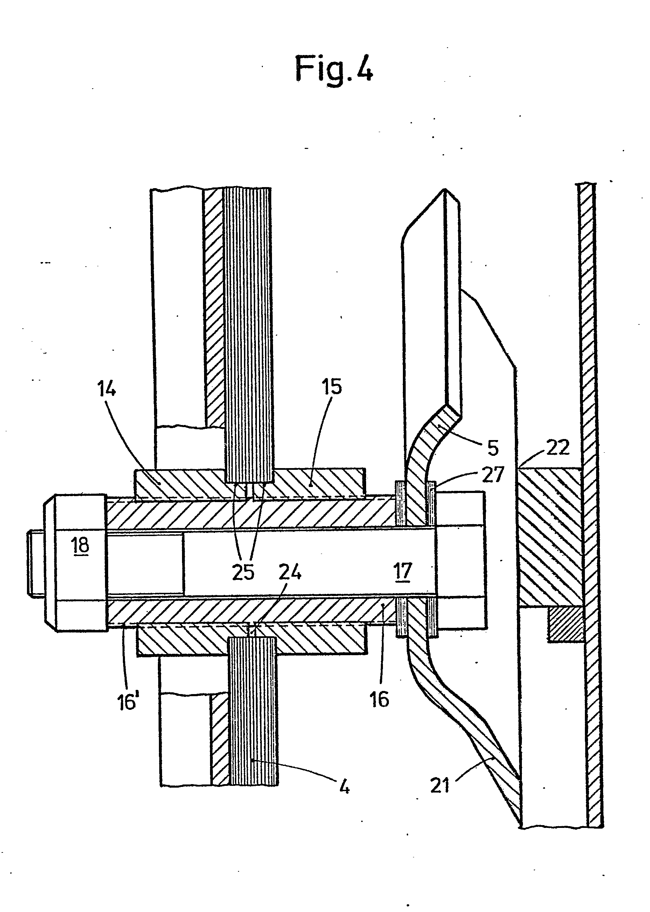

Diese Häckselvorrichtung 23 weist ein insgesamt mit 3 bezeichnetes Messerrad auf, das aus einer Messerradnabe 8 und einer Messerradscheibe 4 besteht. Die Messerradnabe 8 ist auf einer Messerradwelle 9 aufgekeilt, die mittels Lagerungen 10 und 10' am Messerradgehäuse 7 drehbar gelagert ist. Die Messerradnabe 8 ist auf der Messerradwelle 9 gegen die Kraft einer Feder axial verschiebbar angeordnet. Zum axialen Verschieben der Messerradnabe 8, d. h. des gesamten Messerrades 3 auf der Messerradwelle 9 dient eine Stellmutter 11, die mit einer mit Innengewinde versehenen Bohrung auf einem Außengewinde der Messerradwelle 9 angeordnet ist. Die Stellmutter 11 kann mit bekannten Mitteln, wie z. B. Rastbolzen, an einer ungewollten Drehung gehindert sein. An der Messerradscheibe 4 ist eine Mehrzahl von etwa radialstehenden Häckselmessern 5 jeweils mittels zweier Messerbefestigungen 13 angebracht. Jedes Messer 5 besteht aus einem Messerblatt 20 und einer Messerschneide 21, die mit einer an der Gehäusewand 19 angebrachten Gegenschneide 22 zusammenarbeitet, welche im Bereich des Schneidmundes 6 vorgesehen ist. In der Fig. 2 sind die Messer 5 nur schematisch dargestellt. In Fig. 4 dagegen ist gezeigt, wie die Messer 5 zur Erzielung eines ungehinderten Abflusses des geschnittenen Erntegutes verwölbt ausgebildet sind und wie die Schneidkante 21 des Messers 5 angestellt ist.

Jede Messerbefestigung 13 besteht aus einer mit einem durchlaufenden Außengewinde 16' versehenen Gewindehülse 16, die durch eine Bohrung 24 in der Messerradscheibe 4 zu beiden Seiten herausragt. Die Bohrung weist dabei einen größeren Durchmesser auf als die Gewindehülse 16 bezüglich deren Außendurchmesser. Auf der Gewindehülse sind zwei Gegenmuttern 14 und 15 aufgeschraubt, welche — gegeneinander verspannt — die Messerradscheibe 4 zwischen sich festklemmen. Die Gegenmuttern 14 und 15 weisen an ihren zugewandten Enden einen zylindrischen Absatz 25 auf, dessen Außendurchmesser so groß ist, daß der Absatz mit Schiebesitz in die Bohrung 24 in der Messerradscheibe 4 eingreift, so daß sich die Gegenmuttern 14 und 15 rippsicher in der Bohrung 24 abstützen und so sicher verhindern, daß sich die Schneide 21 schräg einstellen und dabei an der Gegenschneide 22 anhaken kann. Die Gefahr dafür ist deshalb groß, weil die beim Schneiden der Futterpakete auftretenden Kräfte sehr groß sind — der Axialabstand der Messerschneide 21 von der Ebene der Messerradscheibe 4 ist beträchtlich —, und diese Kräfte die Messerschneide 21 zu rippen versuchen.

Die Länge des zylindrischen Absatzes 25 ist so gewählt, daß die Dicke der Messerradscheibe 4 größer ist als die Summe der beiden Absätze 25 in den zusammenwirkenden Gegenmuttern 14 und 15.

Wie aus der Fig. 4 ersichtlich, läuft das Innengewinde jeder Gegenmutter 14 und 15 auch im Bereich der Absätze 25 durch, so daß die Abstützwirkung besonders günstig ist.

Der Befestigungswinkel 20 jedes Messers 5 weist für jede Messerbefestigung eine Bohrung 26 auf für eine Gewindeschraube 17, die durch die Bohrung der Gewindehülse 16 gesteckt ist und mit ihrem Gewindeende aus der Gewindehülse 16 herausragt, so daß die Gewindeschraube 17 mit Hilfe einer Mutter 18 an der Gewindehülse 16 befestigt werden kann. Um ein ungewolltes Lösen der Mutter 18 zu verhindern, können übliche Schraubensicherungen, wie z. B. Tellerfedern 27 eingeschaltet sein.

Wenn das neue Messer einen zu großen Abstand von der Gegenschneide 22 aufweist, wird jede Gegenmutter 14 gelöst und die gegenüberliegende Gegenmutter 15 nachgedreht, so daß die Gewindehülse 16 und das daran befestigte Messer in Richtung zur Gegenschneide 22 verschoben wird. Danach braucht die Gegenmutter 14 nur wieder verspannt zu werden. Das Messer ändert dabei seine Stellung gegenüber der Gegenschneide 22 nicht mehr.

Wenn alle Messer nach einer gewissen Zeit nachgeschliffen werden müssen, braucht anschließend eine Verstellung der Einzelmesser mit Hilfe der Messerbefestigungen 13 nicht zu erfolgen, vielmehr wird das gesamte Messerrad 3 mit Hilfe der Stellmutter 11 entsprechend angestellt.

## Patentansprüche

1. Scheibenradhäcksler (23) mit einem auf einer Messerradwelle (9) angebrachten Messerrad (3), das eine als Träger der Messer (5) dienende Messerradscheibe (4) aufweist, wobei als Messerbefestigung eine durch eine Bohrung der Messerradscheibe zu beiden Seiten rechtwinklig zur Ebene der Messerradscheibe (4) herausragende Gewindehülse (16) dient, an welcher das Messer (5) mittels einer durch diese gesteckten Gewindeschrauben (17) mit Muttern (18) befestigt ist, und auf welcher zwei die Messerradscheibe zwischen sich festklemmende Gegenmuttern (14, 15) gegeneinander verspannbar aufgeschraubt sind, dadurch gekennzeichnet, daß mindestens eine der Gegenmuttern (14 bzw. 15) auf ihrer der Messerradscheibe (4) zugewandten Seite mit einem zylindrischen Absatz (25) versehen ist, dessen Außendurchmesser sich mit Schiebesitz am Innendurchmesser der zugeordneten Bohrung (24) in der Messerradscheibe (4) abstützt.

2. Scheibenradhäcksler nach Anspruch 1, dadurch gekennzeichnet, daß für jedes Messer (5) in an sich bekannter Weise zwei Messerbefestigungen (13) vorgesehen sind.

## Claims

1. A disc-wheel chaff-cutter (23) with a blade wheel (3) which is mounted on a shaft (9) and comprises a disc (4) serving as a carrier for the blades (5), the blade-securing means taking the form of a screw-threaded sleeve (16), which extends through a hole in the blade-wheel disc and projects at both sides at right angles to the plane of the blade-wheel disc (4), on which sleeve the blade (5) is secured by means of a screw-bolt (17), pushed through the sleeve and co-operating with nuts (18), and on which sleeve are screwed two counter-nuts (14, 15) which can be urged towards each other and which clamp the blade-wheel disc between them, which chaff-cutter is characterized in that at least one of the counter-nuts (14; 15) is provided, at that of its ends presented to the blade-wheel disc (4), with a cylindrical reduced portion (25), the outside diameter of which bears, with a sliding fit, on the inside diameter of the associated bore (24) in the blade-wheel disc (4).

2. A disc-wheel chaff-cutter according to claim 1, characterized in that two blade-securing means (13) are provided for each blade (5) in the known manner.

**Revendications**

1. Hache-paille (23) dont les couteaux sont montés sur un disque, qui comporte une roue porte-couteaux (3), montée sur un arbre (9) de roue porte-couteaux, qui comprend un disque (4) de roue porte-couteaux servant de support pour les couteaux (5), un manchon fileté (16) ressortant des deux côtés perpendiculairement par rapport au plan du disque (4) de la roue porte-couteaux, par un perçage du disque de la roue porte-couteaux, servant de fixation pour les couteaux, manchon sur lequel le couteau (5) est fixé au moyen d'une vis filetée (17) qui le traverse, munie d'écrous (18), et sur lequel sont vissés, de façon à pouvoir être serrés l'un par rapport à l'autre, deux contre-écrous (14, 15) bloquant le disque de la roue porte-couteaux entre eux, caractérisé par le fait qu'au moins un des contre-écrous (14 ou 15) est muni, sur son côté tourné vers le disque (4) de la roue porte-couteaux, d'un appendice cylindrique (25) dont le diamètre extérieur s'appuie, avec assise coulissante, sur le diamètre intérieur du perçage associé (24) dans le disque (4) de la roue porte-couteaux.

2. Hache-paille dont les couteaux sont montés sur un disque selon la revendication 1, caractérisé par le fait que deux fixations de couteau (13) sont prévues, de façon connue en soi, pour chaque couteau (5).

# Fig.1

# Fig.2

Fig. 3

# Fig.4